# EUROPEAN PATENT SPECIFICATION

(11) **EP 1 220 599 B1**
(45) Date of publication and mention of the grant of the patent: **17.11.2004**
(21) Application number: 00954580.7
(22) Date of filing: 31.07.2000
(51) Int. Cl.: A01F 12/44, B07B 4/06

(54) **ROTARY SEPARATION UNIT**
DREHBARE TRENNUNGSEINHEIT
UNITE DE SEPARATION ROTATIVE

(30) Priority: 29.09.1999 GB 9922932
(43) Date of publication of application: 10.07.2002
(73) Proprietor: CLAAS Selbstfahrende Erntemaschinen GmbH, 33428 Harsewinkel (DE)
(72) Inventor: VISAGIE, Andrie, 9660 Bothaville (ZA)
(86) International application number: PCT/EP2000/007372
(87) International publication number: WO 2001/022799

(56) References cited:
- WO-A-86/04775
- US-A- 2 216 914
- US-A- 3 613 691
- US-A- 3 823 819
- US-A- 5 152 717
- US-A- 5 597 076

## Description

This patent application refers to a rotary separation unit, comprising a rotor housing with a feeding zone, a separation zone and a discharge zone, parts of the circumferential housing being closed and other parts having openings, a rotary driven separation rotor arranged in said rotor housing, beater plates fixed on said separation rotor, and sucking air flow stream generating means sucking an air flow stream from the discharge zone through the rotor housing. Such rotary separation units are used in combine harvesters.

Such a rotary separation unit is known from PCT/US 97/02432. The separation rotor does not only separate, it also threshes and cleans harvested grain. However, for reason of simplification the rotor is called separation rotor further on. In the harvester known from the prior art the bottom part of the rotor housing comprises sieve means. However, these sieve means do not allow an air flow stream to be sucked through the sieve holes into the rotor housing, because the components subordinated to the sieves do not have openings which allow a substantial air flow stream to pass through them and to be sucked through the sieve openings into the rotor housing. The upper part of the rotor housing is closed. Behind the discharging zone of the separation rotor there is a sucking blower as sucking air flow stream generating means. It sucks an air flow stream out of the rotor housing. The air flow streams inside of the rotor housing are guided through four channels defined by the beater plates, because they cut the cross section of the rotor housing in four quarters if four beater plates are fixed to the shaft of the separation rotor. With this arrangement it is obvious to an expert that the air flow stream sucked in through the four channels will substantially be sucked in through the feeding opening of the rotor housing, whereas the air flow stream through the two bottom channels will substantially be sucked in through the feeding opening. This would also apply if other numbers of beater plates, for example 3 or 5, are used.

Of course, it must be considered that the system known from prior art is not stationary, in use the separation rotor is rotating with high speeds under working condition. This means that the blower sucks air into the channels during revolutions of the separation rotor.

These conditions imply several disadvantages: if there is fed a lot of harvested good into the rotor housing, the feeding opening of the rotor housing is filled up with unthreshed straw or ears of plants. Then it is quite difficult to suck air through such a bulk of material, with the consequence, that nearly no air is sucked into the channels. Without the sucking air flow stream, the harvested good tends to clogg, and so the rotor or the feeding opening might get blocked very quickly. Additionally, the harvested crop tends to move along the inner surface of the rotor housing through the separation zone. So the air flow stream is sucked through the center-close section of the channels. However, there it cannot whirl through the bulk of harvested crop which moves more on the periphery. These aerodynamics inside of the rotor housing result in performance losses of the rotary separation unit.

Accordingly, it the subject of this invention to improve the distribution of air flow stream inside of the rotor housing.

An improvement can be achieved if the beater plates have openings in their structure which allow an air flow stream to pass through. By this, an exchange of air through the different channels is possible. Under rotation, the air in a channel also gets accellerated by the rotational movement of the beater plates. This means, that there is a slight excess pressure before the beater plates, and a slight negative pressure behind the beater plates, seen in the rotational direction of the beater plates. This pressure difference can now be levelled out by an air stream passing through the openings. This air stream passing the openings also passes the harvested crop lying on the beater plates, and so it gets blown through and whirled. This allows grain kernels to slip through the layer of straw and to come closer to the sieve openings. So the separation perfomance can be raised by the openings in the beater plates.

According to a further improvement at least a part of the air stream is sucked through the sieve openings into the rotor housing. Then also the upper channels are capable of sucking an air stream through the bottom channels and the bottom sieve openings respectively. Again, in those regions, where the openings are, the layer of harvested crop does not firmly stick on the protruding surface of the beater plates, the air flow stream desintegrates the layer of harvested crop and allows that threshed and loosened grain kernels can slip out of the straw layer and leave the rotor housing through the sieve openings. The other advantage that the air in such regions is whirled around, which helps the crop layer to start with an axial movement along the interior surface of the rotor housing, also applies. The biggest advantage of this preferred embodiment is that now not all the air volume needs to be sucked through the feeding opening, and the air volume sucked through the sieve openings supports the separation and cleaning function of the rotary separation unit..

Further improvements of the basic idea can be achieved according to the means mentioned in the subclaims. If at least one opening is arranged in the upstream first third of the length of a separation rotor, the start of the axial movement of the harvested crop inside of the rotor housing can be improved. Additionally, if air volume is sucked in through the sieve openings, the throughput of an air flow stream through the sieve openings can be increased in a section where the sucking action of the blower through the bottom channels is of limited effect. If the sizes of a plurality of openings are different, the air flow stream can be guided and regulated in its intensity towards sections of the rotor housing where it is desired. For example, it could be advantageous to start with small openings in the middle of the rotor housing length and to continuously increase the diameter of the openings towards the feeding zone. By this, the curve of air volume sucked in through the sieve openings can be flattened out. If the edges of the openings are rounded, breaking and cracking of the grain kernels can be avoided. If the beater plates are releasably fixed to the separation rotor and are thereby exchangeable against other beater plates, it is very easy to adapt the rotary separation unit to different working conditions, as different crops to be harvested, different humidity of the material, and the like. If the beater plates comprise threshing elements in their outer peripherical section, the threshing, feeding, separating and cleaning function of the beater plates can be combined with the air flow stream guiding function of the openings in the beater plates. If the beater plates are made of segments which are fixed in alignment to the separation rotor, it is not necessary to exchange a full length of a beater plate along the length of the separation rotor, if different openings are required or the upstream section of the beater plate needs to be exchanged due to wear and tear. If the beater plates are releasably and adjustably fixed to the separation rotor in their radial direction, they can easily be exchanged and adapted to the clearance required for the present working conditions between the outer end of the beater plates and the inner surface of the rotor housing. But also an axial adjustment can be advantageous.If the radial height of the beater plates varies over the length of the separation rotor, the intensity of threshing and separation of the harvested crop can be adapted over the length of the separation rotor.

The advantages of this invention will become apparent upon consideration of the following detailed disclosure of the invention, especially when it is taken in conjunction with the accompanying drawings wherein:
Fig. 1 is a schematic side elevation view upon a rotary separation unit as known from the prior art,
Fig. 2 is a schematic side elevation view upon a rotary separation unit according to the claimed invention,
Fig. 3 shows a schematic cross sectional view upon the cross section of the rotor housing, wherein the beater plates of the separation rotor have openings,
Fig. 4 shows a perspective view upon a separation rotor comprising openings in the beater plates.

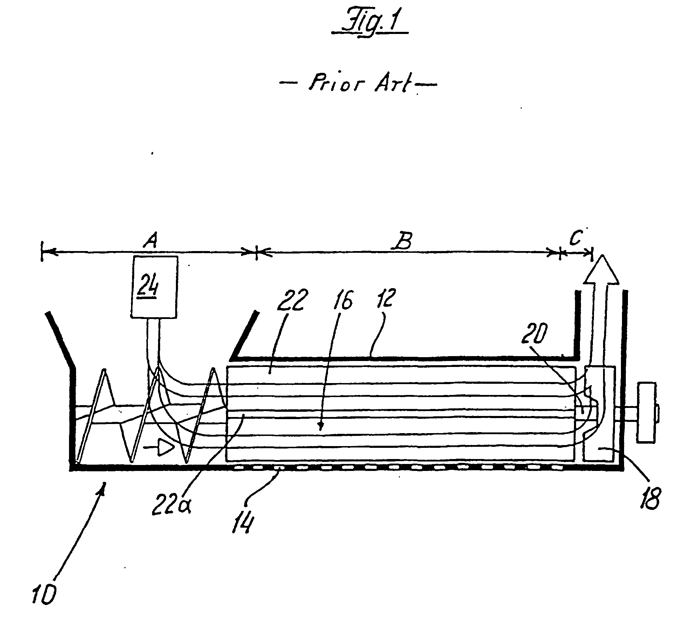

In Fig. 1 there is shown a separation unit 10 as known from the prior art. It includes a rotor housing 12 with a feeding zone A, a separation zone B and a discharge zone C, sieve means 14 arranged at least in said separation zone B, a rotary driven separation rotor 16 arranged in said housing 12, and a sucking air flow stream generating means 18 generating a sucking air flow stream moving through the rotor housing 12. The separation rotor 16 comprises a rotor shaft 20 and beater plates 22. Because the beater plates 22 are extending lengthwise along the rotor shaft 20, they define channels between them, through which the harvested crop and the air flow stream is transported.

Looking now closer to the pathes of the air flow streams sucked into the rotor housing 12, it becomes apparent that the air flow streams can only directly pass through the channels, because beater plate 22a separates the upper channel from the bottom channel in the position as it is shown. Because the rotor housing 12 around the upper channel is closed, the air volume 24 of the air flow stream sucked in through the upper channel can only be sucked in through the feeding opening of the rotor housing 12. The same applies for the air volume sucked in through the bottom channels, because there are no openings beyond the sieve openings which would allow a substantial air flow stream pass through. It is understood, that of course there can be more or less beater plates 22 arranged around the rotor shaft 20, and also the fraction of closed covers and sieve means around the circumference of the rotor housing and the length of it can be choosen differently, without changing the principle of air flow in the respective channels. It also needs to be noted, that the terms "upper", "lower" and "bottom" are only used for describing the examples shown in the drawings; these terms are not meant to limit the scope of invention. Of course, sieve openings can also be placed on top of the housing or on the sides, and also closed sections can be arranged at the bottom or the sides.

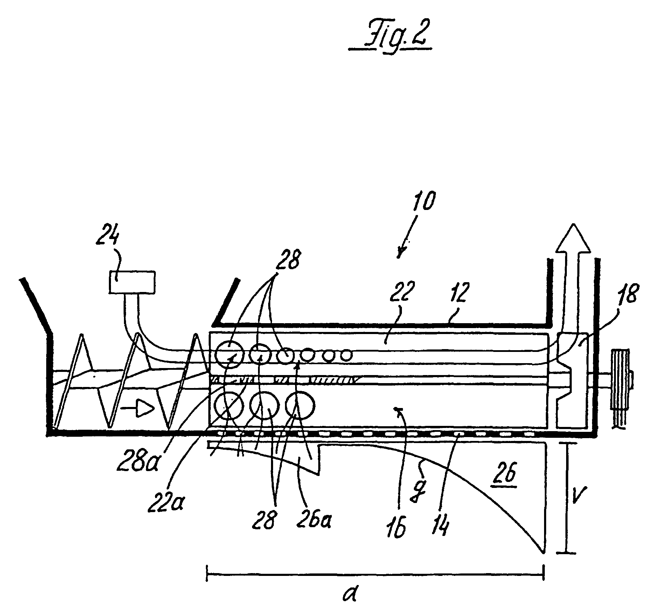

The air flow through the sieve means 14 and the upper channel is improved, if the beater plates 22 have openings 28 in their structure, as shown in Fig. 2. As illustrated by the dotted lines, the beater plate 22a comprises three openings 28a which are similar to the openings shown in the vertically shown beater plate separating the bottom channels. There is air volume sucked through the openings 28a and the upper channel by the air flow stream generating means, and that air volume is sucked through the sieve openings in proximity to the openings 28a. As illustrated by the graph g, the additional volume sucked through openings 28a can be as much as shown as air volume 26a. As a result, the air volume 24 sucked in through the feeding opening of the rotor housing 12 may be lower. By this, an uneven air flow stream can be achieved in the different channel positions during a revolution of the separation rotor. As long as the channels are aligned to the upper closed circumference of the rotor housing, they suck their air volume through the feeding opening on the one side and through the openings 28 and the sieve openings on the other side. As soon as the channels rotate into a position where they are aligned to the sieve means with their openings, they suck their air volume 26 through those sieve openings which are closest to the air flow stream generating means 18. Of course, the sucking performance of the air flow stream generating means, the diameter of the sieve openings and the diameter of the openings 28 in the beater plates 22 may be adapted to each other as it is required. Accordingly, graph g should be understood as an example only. Alterations can be achieved without problems.

The size and diameter of the openings 28 may vary as it fits to the operating conditions. Besides a variation of sizes of the openings, also their geometry and position on the beater plates 22 can vary as it may be requested to achieve certain aerodynamic effects. To achieve a more even and flat graph g, other than shown in Fig. 2, the openings 28 may be of increasing diameter in the upstream direction of the flow of harvested grain, as shown on the beater plate 22 separating the upper two channels. Openings 28 may be arranged all along the length of the separation zone B and even in the discharging zone C. As it can also be seen by graph g in Fig. 2, it is advantageous to arrange the openings in the first upstream third of the separation rotor length because there the sucking action of the air flow stream generating means is at a minimum. To arrange the openings 28 in that region is also advantageous, because the radial direction of the air flow stream caused by the openings 28 supports the acceleration and axial movement of the harvested crop. To avoid damages to the grain kernels, the edges of the openings 28 should be rounded.

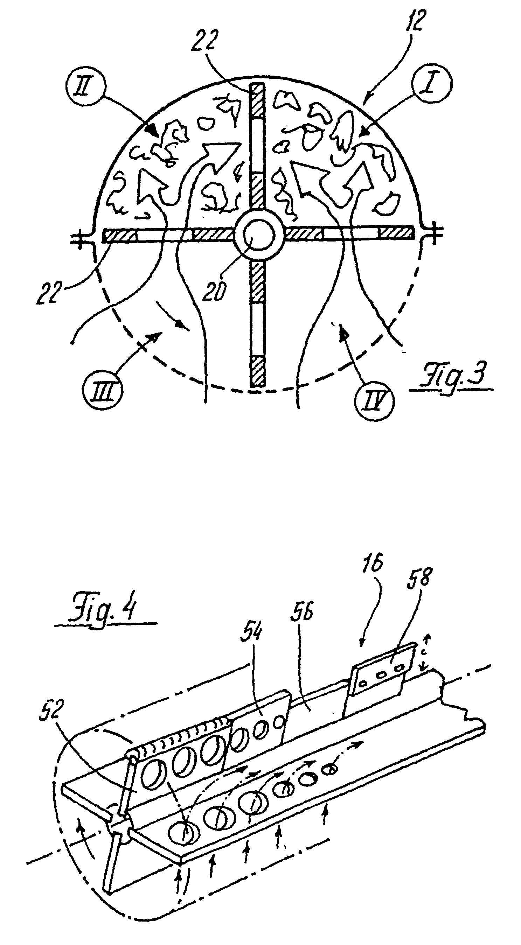

Fig. 3 shows a cross-sectional view through rotor housing 12. As the lower part of the rotor housing 12 there are sieve means 14 with openings, and inside of the rotor housing 12 a separation rotor 16 with a rotor shaft 20 and beater plates 22 can be seen. The beater plates 22 separate the space inside of the rotor housing 12 into four channels I, II, III and IV. Channels I and II are the upper two channels, and channels III and IV are the two lower channels. Channels I - IV can also be filled with harvested crop 40, as shown for channels I and II. The air flow stream sucked in by the air flow stream generating means 18 through channels I and II passes the openings in the sieve means 14, the openings 28 in the beater plates 22 and moves forward downstream towards the air flow stream generating means. It can be seen very well in this cross-sectional view, that the air flow stream hits different sections of harvested crop being transported in one of the channels during one revolution of the separation rotor 16. In fact, with the arrangement of four channels and the sieve means 14 having openings in one half of the circumference of the rotor housing 12, the harvested crop in one channel gets air flow stream blasted from all sides during one revolution.

In Fig. 4 the separation rotor 16 is shown in a perspective view. On the shaft 20 of the separation rotor 16 are fixed several segments of beater plates 22. The outer peripherical section of the beater plate segment 52 is equipped with rasp bar segments for performing a threshing action upon the harvested crop in the clearance zone between the rasp bar and the inner surface of the rotor housing 12, where respective grates or corresponding segments may be arranged. Such rasp bar is subject of wear and tear and it can also be damaged or destroyed by foreign objects like stones or metal pieces. To allow replacement, it needs to be easily exchangeable. Therefore, such segments are releasably fixed to the rotor shaft 20. If the beater plate segments are easily exchangeable, they can of course also be exchanged to adapt the separation rotor to certain working conditions. For example, certain crop may require more or less openings in the beater plates 22, or the beater segment 52 is exchanged against a segment which has no rasp bar. The beater plate segments should also be adjustable in their radial height, for example to fine tune the clearance between the rasp bar and corresponding segments fixed on the inner surface of the rotor housing 12, or to alter the grade of aggressivity with which the separation rotor acts upon the harvested grain. Instead of adjusting the radial height of the beater plate segments, the segments can also have different heights. If they are fixed on a rail or in a swallowed-tailed groove together with segments of different height, then the diameter of the separation rotor is different depending from the height of the respective beater plate segments fixed to the separation rotor 16. An example can be seen in Fig. 4: beater plate segment 52 reaches the maximum height at its rasp bar, beater plate segment 54 is lower, but still taller than beater plate segment 56. Beater plate 58 is fastened by screws, and it is adjustable in its radial height by slotted holes. The differing diameter of the separation rotor allows a compaction an reexpansion of the harvested crop being fed through the rotor housing 12.

While the preferred structure in which the principles of the present invention have been incorporated is shown and described above it is to be understood that the invention is not to be limited to the particular details thus presented, but in fact, widely different means may be employed in the practice of the broader aspects of this invention. The scope of the appended claims is intended to encompass all obvious changes in the details, materials and arrangements of parts which will occur to one skilled in the art upon a reading of the disclosure.

## Claims

1. Rotary separation unit (10), comprising a rotor housing (12) with a feeding zone (A), a separation zone (B) and a discharge zone (C), parts of the circumferential housing (12) being closed and other parts having openings, a rotary driven . separation rotor (16) arranged in said rotor housing (12), beater plates (22) fixed on said separation rotor (16) and sucking air flow generating means (18) sucking an air flow stream (24) from the discharge zone (C) through the rotor housing,
**characterized in,**
**that** the beater plates (22) have at last one opening (28, 28a) in their structure which allow an air flow stream to pass trough.

2. Rotary separation unit according to claim 1,
**characterized in,**
**that** at least a part of the air flow stream (24) is sucked through the sieve openings into the rotor housing (12).

3. Rotary separation unit according to claim 1,
**characterized in,**
**that** at least one opening (28, 28a) is arranged in the upstream first third of the length of a separation rotor.

4. Rotary separation unit according to claim 1,
**characterized in,**
**that** the sizes of a plurality of openings (28, 28a) are different.

5. Rotary separation unit according to claim 1,
**characterized in,**
**that** the edges of the openings (28, 28a) are rounded.

6. Rotary separation unit according to claim 1,
**characterized in,**
**that** that the beater plates (22) are releasably fixed to the separation rotor (16) and are thereby exchangeable against other beater blades (22).

7. Rotary separation unit according to claim 1,
**characterized in,**
**that** the beater blades (22) comprise threshing elements (XX) in their outer peripherical section.

8. Rotary separation unit according to claim 1,
**characterized in,**
**that** the beater plates (22) are made of segments which are fixed in alignment to the separation rotor (16).

9. Rotary separation unit according to claim 1,
**characterized in,**
**that** the beater plates (22) are releasably and adjustably fixed to the separation rotor (16).

10. Rotary separation unit according to claim 1,
**characterized in,**
**that** that the radial height of the beater plates (22) varies over the length of the separation rotor (16).

## Patentansprüche

1. Rotationstrenneinheit (10), umfassend ein Rotorgehäuse (12) mit einer Zuführzone (A), einer Trennzone (B) und einer Ausstoßzone (C), wobei Teile des umfangenden Gehäuses (12) geschlossen sind und andere Teile Öffnungen aufweisen, einen drehend angetriebenen Trennrotor (16), der im Gehäuse (12) angeordnet ist, Schlagplatten (22), die auf dem Trennrotor (16) befestigt sind, und ansaugende Luftstromerzeugungsmittel (18), welche einen Luftstrom (24) von der Ausstoßzone (C) durch das Rotorgehäuse saugen,
**dadurch gekennzeichnet,**
**dass** die Schlagplatten (22) wenigstens eine Öffnung (28, 28a) in ihrem Aufbau aufweisen, welche einem Luftstrom das Hindurchstreichen erlaubt.

2. Rotationstrenneinheit nach Anspruch 1,
**dadurch gekennzeichnet,**
**dass** wenigstens ein Teil des Luftstroms (24) durch die Sieböffnungen in das Rotorgehäuse (12) gesaugt wird.

3. Rotationstrenneinheit nach Anspruch 1,
**dadurch gekennzeichnet,**
**dass** wenigstens eine Öffnung (28, 28a) im stromaufwärtigen ersten Drittel der Länge eines Trennrotors angeordnet ist.

4. Rotationstrenneinheit nach Anspruch 1,
**dadurch gekennzeichnet,**
**dass** die Größen einer Mehrzahl von Öffnungen (28, 28a) unterschiedlich sind.

5. Rotationstrenneinheit nach Anspruch 1,
**dadurch gekennzeichnet,**
**dass** die Kanten der Öffnungen (28, 28a) abgerundet sind.

6. Rotationstrenneinheit nach Anspruch 1,
**dadurch gekennzeichnet,**
**dass** die Schlagplatten (22) lösbar am Trennrotor (16) befestigt sind und dadurch gegen andere Schlagplatten (22) austauschbar sind.

7. Rotationstrenneinheit nach Anspruch 1,
**dadurch gekennzeichnet,**
**dass** die Schlagplatten (22) Dreschelemente (XX) in ihrem äußeren Umfangsabschnitt umfassen.

8. Rotationstrenneinheit nach Anspruch 1,
**dadurch gekennzeichnet,**
**dass** die Schlagplatten (22) aus Segmenten hergestellt sind, welche gefluchtet auf dem Trennrotor (16) befestigt sind.

9. Rotationstrenneinheit nach Anspruch 1,
**dadurch gekennzeichnet,**
**dass** die Schlagplatten (22) lösbar und einstellbar am Trennrotor (16) befestigt sind.

10. Rotationstrenneinheit nach Anspruch 1,
**dadurch gekennzeichnet,**
**dass** die radiale Höhe der Schlagplatten (22) über die Länge des Trennrotors (16) variiert.

## Revendications

1. Unité de séparation rotative (10), comprenant une enveloppe (12) de rotor munie d'une zone d'alimentation (A), d'une zone de séparation (B) et d'une zone de déchargement (C), certaines parties de l'enveloppe circonférentielle (12) étant fermées et d'autres parties comportant des ouvertures, un rotor de séparation entraîné en rotation (16) placé dans ladite enveloppe (12) de rotor, des plaques de batteur (22) fixées sur ledit rotor de séparation (16) et un moyen de génération (18) de flux d'air d'aspiration, qui aspire un flux d'air (24) depuis la zone de déchargement (C) à travers l'enveloppe de rotor, **caractérisée en ce que** les plaques de batteur (22) ont au moins une ouverture (28, 28a) dans leur structure qui permettent le passage d'un flux d'air.

2. Unité de séparation rotative selon la revendication 1, **caractérisée en ce qu'**au moins une partie du flux d'air (24) est aspirée par les ouvertures de tamis présentes dans l'enveloppe (12) de rotor.

3. Unité de séparation rotative selon la revendication 1, **caractérisée en ce qu'**au moins une ouverture (28, 28a) est formée dans le premier tiers amont de la longueur d'un rotor de séparation.

4. Unité de séparation rotative selon la revendication 1, **caractérisée en ce que** les tailles d'une pluralité d'ouvertures (28, 28a) sont différentes.

5. Unité de séparation rotative selon la revendication 1, **caractérisée en ce que** les bords des ouvertures (28, 28a) sont arrondis.

6. Unité de séparation rotative selon la revendication 1, **caractérisée en ce que** les plaques de batteur (22) sont fixées de manière amovible au rotor de séparation (16) et sont de ce fait échangeables avec d'autres plaques de batteur (22).

7. Unité de séparation rotative selon la revendication 1, **caractérisée en ce que** les plaques de batteur (22) comprennent des éléments de battage (XX) dans leur portion périphérique extérieure.

8. Unité de séparation rotative selon la revendication 1, **caractérisée en ce que** les plaques de batteur (22) sont constituées de segments qui sont fixées en alignement avec le rotor de séparation (16).

9. Unité de séparation rotative selon la revendication 1, **caractérisée en ce que** les plaques de batteur (22) sont fixées de manière amovible et réglable sur le rotor de séparation (16).

10. Unité de séparation rotative selon la revendication 1, **caractérisée en ce que** la hauteur radiale des plaques de batteur (22) varie sur la longueur du rotor de séparation (16).
